# EUROPEAN PATENT APPLICATION

(11) **EP 4 742 624 A1**
(43) Date of publication of application: **13.05.2026**
(21) Application number: 24844165.1
(22) Date of filing: 02.01.2024
(51) Int. Cl.: H04L 61/5007, H04W 76/10

(54) **NETWORK CONNECTION METHOD AND APPARATUS, ELECTRONIC DEVICE, AND READABLE STORAGE MEDIUM**

(30) Priority: 24.07.2023 CN 202310912046
(71) Applicant: Midea Group (Shanghai) Co., Ltd., Shanghai 201702 (CN); Midea Group Co., Ltd., Foshan, Guangdong 528311 (CN)
(72) Inventor: XIAN, Zhixiong, Shanghai 201702 (CN)
(74) Representative: Ran, Handong
(86) International application number: PCT/CN2024/070166
(87) International publication number: WO 2025/020463

(57) **Abstract**

The present application relates to the technical field of Internet of Things, and discloses a network connection method and apparatus, an electronic device, and a readable storage medium. The network connection method for an Internet of Things device comprises: an Internet of Things device needing network connection scanning surrounding network devices, wherein the network devices include a routing device and networked household appliances; receiving responses of the network devices; on the basis of the responses, determining whether the Internet of Things device needing network connection is located in a weak network environment; when the Internet of Things device needing network connection is located in the weak network environment, selecting a mutual assistance device from among networked devices; and the Internet of Things device needing network connection being connected to the network by means of the mutual assistance device, such that the Internet of Things device is connected to a target server.

## Description

The present application claims priority of Chinese Patent Application No. 202310912046.X, in the title of "Network connection method and apparatus, electronic device, and readable storage medium", filed on July 24, 2023, the entire contents of which are hereby incorporated by reference in its entirety.

### TECHNICAL FIELD

The present disclosure relates to the technical field of Internets of Things (IoT), and in particular to a network connection method, an apparatus, an electronic device, and a readable storage medium.

### BACKGROUND

During a network configuration or a connection phase for an IoT device, when the IoT device is far from a router, a signal strength of the network is weak, the IoT device cannot be connected to the network through the router.

For an IoT device that is normally connected to the network, when a position of the IoT device is changed, and the IoT device is far from the router, a signal strength of the router becomes weaker, which may cause the IoT device to go offline.

### SUMMARY OF THE DISCLOSURE

The present disclosure aims to solve a least one of the technical problems in the related art or in the related technologies.

In view of this, some embodiments of a first aspect of the present disclosure provide a network connection method for an IoT device.

Some embodiments of a second aspect of the present disclosure provide a network connection apparatus for the IoT device.

Some embodiments of a third aspect of the present disclosure provide an electrical device.

Some embodiments of a fourth aspect of the present disclosure provide a readable storage medium.

In the first aspect, the present disclosure provides a network connection method for an IoT device, including:
scanning, by an IoT device that requires a network connection, network devices surrounding the IoT device; wherein the network devices include a routing device and a household appliance that is network-connected;
receiving responses from the network devices;
determining whether the IoT device that requires the network connection is in a weak network environment based on the responses;
in a case where the IoT device that requires the network connection is in the weak network environment, selecting a mutual assistance device from networked devices; and
performing, by the IoT device that requires the network connection, network connection through the mutual assistance device, causing the IoT device to be connected to a target server.

In the second aspect, the present disclosure provides a network connection apparatus, including:
a scanning module, configured for the IoT device that requires a network connection to scan network devices surrounding the IoT device; wherein the network devices include a routing device and a household appliance that is network-connected;
a receiving module, configured to receive responses from the network devices;
a determination module, configured to determine whether the IoT device that requires the network connection is in a weak network environment based on the responses;
a selecting module, configured to select a mutual assistance device from networked devices in a case where the IoT device that requires the network connection is in the weak network environment; and
a connection module, configured for the IoT device that requires the network connection to perform network connection through the mutual assistance device, causing the IoT device to be connected to a target server.

In the third aspect, the present disclosure provides an electrical device. The electrical device includes a processor and a memory. The memory stores programs and instructions executable on the processor. When the programs or the instructions are executed by the processor, the operations of the network connection method for the IoT device according to the first aspect are implemented.

In the fourth aspect, the present disclosure provides a readable storage medium, on which the programs and instructions are stored. When the programs or instructions are executed by a processor, the operations of the network connection method for the IoT device according to the first aspect are implemented.

In the present disclosure, based on a Wi-Fi mutual assistance capability of the household appliances, when the IoT device is at an edge of a weak signal coverage of a router, a configured IoT device can access the network through a networked household appliance as a proxy to connect to the target server. In a weak network environment of a user, this method can solve the problems of a high connection failure rate and a high device loss rate of the IoT device, due to a long distance from the IoT device to the router and a weak signal, thereby effectively improving the user experience.

### BRIEF DESCRIPTION OF THE DRAWINGS

FIG. 1 illustrates a first flowchart of a network connection method for an IoT device provided by some embodiments of the present disclosure.
FIG. 2 illustrates a second flowchart of a network connection method for an IoT device provided by some embodiments of the present disclosure.
FIG. 3 illustrates a third flowchart of a network connection method for an IoT device provided by some embodiments of the present disclosure.
FIG. 4 illustrates a fourth flowchart of a network connection method for an IoT device provided by some embodiments of the present disclosure.
FIG. 5 illustrates a fifth flowchart of a network connection method for an IoT device provided by some embodiments of the present disclosure.
FIG. 6 illustrates a sixth flowchart of a network connection method for an IoT device provided by some embodiments of the present disclosure.
FIG. 7 illustrates a seventh flowchart of a network connection method for an IoT device provided by some embodiments of the present disclosure.
FIG. 8 illustrates a structural diagram of a network connection apparatus for an IoT device provided by some embodiments of the present disclosure.
FIG. 9 illustrates a structural diagram of an electronic device provided by some embodiments of the present disclosure.
FIG. 10 illustrates a schematic hardware structure diagram of an electronic device provided by some embodiments of the present disclosure.
FIG. 11 illustrates a schematic diagram of a distance between a router and an intelligence household appliance provided by some embodiments of the present disclosure.
FIG. 12 illustrates a schematic network topology diagram provided by some embodiments of the present disclosure.
FIG. 13 illustrates a schematic Wi-Fi mutual assistance connection routing topology diagram provided by some embodiments of the present disclosure.

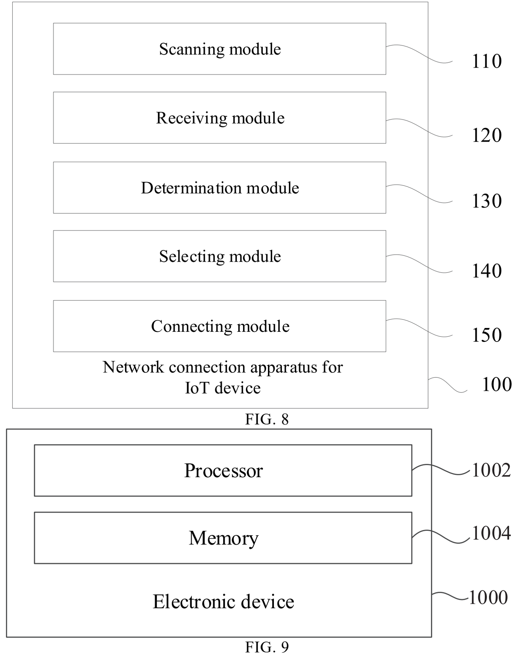

The corresponding relationship between reference numerals and component names in FIGS. 8-13 are as follows:
100: Network connection apparatus for IoT device; 110: Scanning module; 120: Receiving module; 130: Determination module; 140: Selecting module; 150: Connection module; 200: Third router; 202: First intelligence household appliance; 204: Second intelligence household appliance; 206: Third intelligence household appliance; 210: Cloud service; 212: First router; 214: Second router; 216: First IoT device; 218: First mutual assistance device; 220: Second IoT device; 222: Second mutual assistance device; 224: Third mutual assistance device; 226: Fourth intelligence household appliance; 1000: Electronic device; 1002: Processor; 1004: Memory; 1100: Electronic device; 1101: Radio frequency unit; 1102: Network module; 1103: Audio output unit; 1104: Input unit; 11041: Graphics processor; 11042: Microphone; 1105: Sensor; 1106: Display unit; 11061: Display panel; 1107: User input unit; 11071: Touch panel; 11072: Other input devices; 1108: Interface unit; 1109: Memory; 1110: Processor.

### DETAILED DESCRIPTION

The technical solutions in some embodiments of the present disclosure will be clearly described in conjunction with the drawings in some embodiments of the present disclosure. Obviously, the described embodiments are only a part of some embodiments of the present disclosure, but not all of the embodiments. Based on the embodiments in the present disclosure, other embodiments obtained by any one of ordinary skill in the art, fall within the protection scope of the present disclosure.

Terms "first", "second", and etc., in the detailed description and the claims of the present disclosure are applied to distinguish similar objects, and are not applied to describe a specific order or a sequence. It may be understood that the data used in this way can be interchanged under appropriate circumstances, so that some embodiments of the present disclosure can be implemented in an order other than the order illustrated or described herein. Moreover, the objects distinguished by "first", "second", and etc., are generally of one type, and the number of the objects is not limited. For example, the first object can be one or more. In addition, a term "and/or" in the detailed description and claims indicates at least one of connected objects, and a character "/" generally indicates that associated objects are in an "or" relationship.

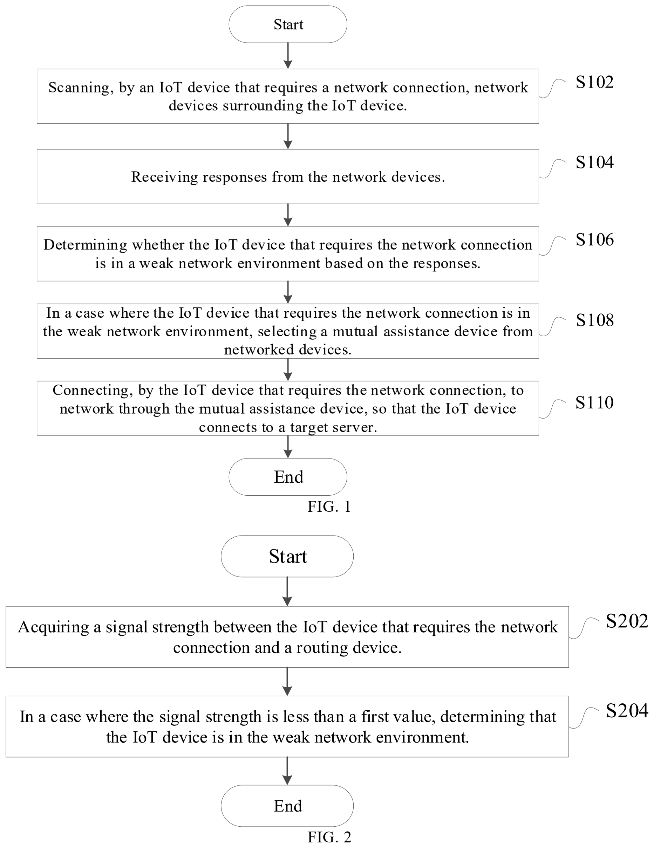

The network connection method and apparatus, the electronic device, and the readable storage medium provided by some embodiments of the present disclosure will be described in detail below with reference to FIGS 1-13 through some specific embodiments and application scenarios.

In some embodiments of the present disclosure, a network connection method for an Internets of things (IoT) device is provided. FIG 1 illustrates a first flowchart of a network connection method for an IoT device provided by some embodiments of the present disclosure. As illustrated in FIG. 1, the network connection method for the IoT device includes operations at blocks in the following.

At block S102: scanning, by an IoT device that requires a network connection, network devices surrounding the IoT device, where the network devices include a routing device and a household appliance that is network-connected.

At block S104: receiving responses from the network devices.

At block S106: determining whether the IoT device that requires the network connection is in a weak network environment based on the responses.

At block S108: in a case where the IoT device that requires the network connection is in the weak network environment, selecting a mutual assistance device from networked devices.

At block S110: connecting, by the IoT device that requires the network connection, to network through the mutual assistance device, so that the IoT device is connected to a target server.

It may be understood that during a network configuration or connection phase for the IoT device, when the IoT device is far from a router, a network signal strength is weak, and the IoT device cannot be connected to the network through the router, resulting in a loss of a network connection functionality of the IoT device.

For an IoT device normally connected to the network, when a position of the IoT device changes and moves away from the router, the network signal of the router is weakened, which may cause the IoT device go offline, and a user cannot control the IoT device remotely.

In summary, due to a long distance from the router, the IoT device cannot be connected to the network stably, resulting in a poor product experience, a reduced user experience, increased complaints, and adverse impact on the brand image.

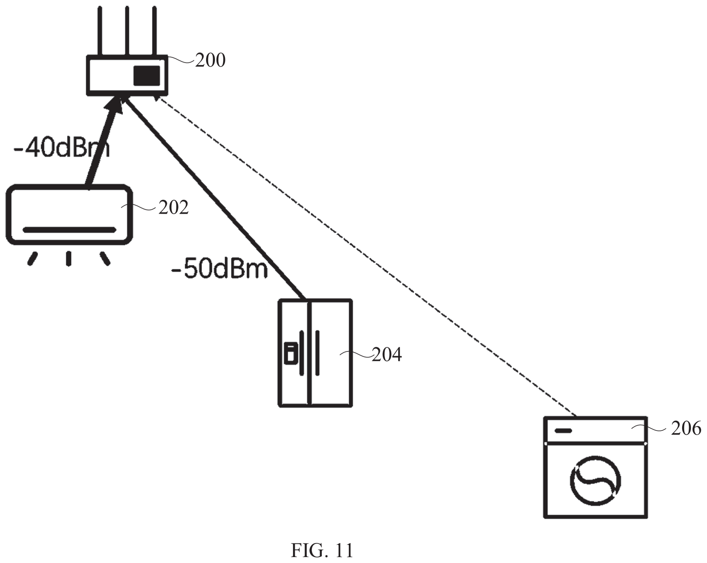

The IoT device may be intelligence household appliances and other devices. As illustrated in FIG. 11, a third router 200 is connected with a first intelligence household appliance 200 with the router signal strength of -40dBm, the third router 200 is connected with a second router 204 with the router signal strength of -50dBm, the third router 200 is connected with a third intelligence household appliance 206 with the router signal strength less than -65dBm. The third intelligence household appliance 206 is the farthest from the third router 200. The farther the distance, the weaker the signal strength. The success rate of the third intelligence household appliance 206 connected to the third router 200 is low. In general, when the router signal strength at a location of the third intelligence household appliance 206 is less than -65dBm, a stable connection cannot be achieved, and a network configuration is difficult. In summary, when the signal strength is weak, a connection failure rate and a device loss rate is high.

Optionally, when the IoT device needs to be connected to the network, first, the IoT device scans the surroundings according to a normal process to detect the network devices that can be connected to the network, where the network devices may be a router or other household appliances that have been network-connected. Upon receiving a request, all network devices will respond to the request. After receiving the responses, a terminal of the IoT device to be connected to the network determines whether the IoT device that requires the network connection is in the weak network environment. When the IoT device is in the weak network environment, an optimal mutual assistance connection is selected from the household appliances that have been network-connected to establish a private mutual assistance connection between household appliances.

In some embodiments of the present disclosure, based on a Wi-Fi mutual assistance capability of household appliances, when the IoT device is at an edge of the weak signal coverage of the router, the configured IoT device can access the network through the household appliance that have been network-connected as a proxy to connect to the target server. This method may solve the problems of the high connection failure rate and the high device loss rate of IoT devices, in the weak network environment of the user, due to the long distance from the IoT device to the router and the weak signal strength, thereby effectively improving the user experience.

In some embodiments of the present disclosure, the network connection method for the IoT device further includes:
when the IoT device that requires the network connection is not in the weak network environment, selecting a routing device from the networked devices, the IoT device that requires the network connection is connected to the network through the routing device, so that the IoT device is connected to the target server.

Optionally, after receiving the responses, the terminal of the IoT device to be connected to the network determines whether the IoT device that requires the network connection is in the weak network environment. When the IoT device that requires the network connection is not in the weak network environment, the IoT device connects to the routing device. Specifically, the IoT device and the routing device may be connected in Wireless Network Access Point (AP) mode and Wireless Terminal Station (STA) mode, and the IoT device is connected to the target server through the routing device.

In some embodiments of the present disclosure, FIG. 2 illustrates a second flowchart of a network connection method for an IoT device provided by some embodiments of the present disclosure. As illustrated in FIG. 2, the network connection method for the IoT device further includes operations at blocks in the following.

At block S202: acquiring a signal strength between the IoT device that requires a network connection and a routing device.

At block S204: in a case where the signal strength is less than a first value, determining that the IoT device is in a weak network environment.

Optionally, when the IoT device that requires to be connected to the network, the IoT device first scans the surroundings according to the normal process, sends a request to the network devices, and obtains a response from the routing device. Then, the signal strength value between the IoT device and the routing device is acquired. When the signal strength value is less than the first value, the IoT device is in the weak network environment. For example, the first value may be between -50dBm and -70dBm, or between - 55dBm and -60dBm.

It may be understood that the IoT device being in the weak network environment means that the distance between the IoT device and the routing device is long, the signal is weak, the connection failure rate is high, and the device loss rate is high.

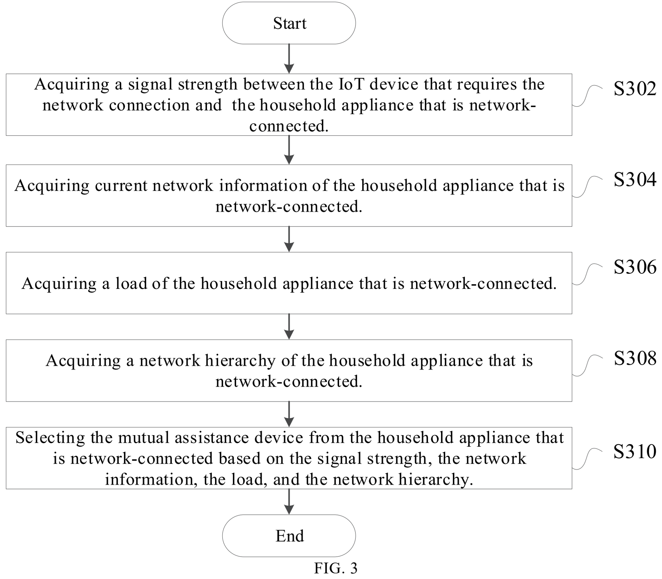

In some embodiments of the present disclosure, FIG. 3 illustrates a third flowchart of a network connection method for an IoT device provided by the present device. As illustrated in FIG. 3, the selecting a mutual assistance device from networked devices includes operations at blocks in the following.

At block S302: acquiring a signal strength between the IoT device that requires the network connection and the household appliance that is network-connected.

At block S304: acquiring current network information of the household appliance that is network-connected.

At block S306: acquiring a load of the household appliance that is network-connected.

At block S308: acquiring a network hierarchy of the household appliance that is network-connected.

At block S310: selecting the mutual assistance device from the household appliance that is network-connected based on the signal strength, the network information, the load, and the network hierarchy.

Optionally, when selecting the mutual assistance device from the networked devices, access judgement rules include operations in the following.
(1) Confirming whether the signal strength is suitable for connection.
(2) Confirming whether the network that the networked devices are connected to is a target network to be connected by the current device.
(3) Confirming whether the load accessed by the networked devices meets a requirement.
(4) Confirming whether the network hierarchy of the networked device or the mutual assistance device meets requirements.

The access judgement rules include but not limited to the aforementioned points. Through a network optimization algorithm, the mutual assistance device that meet mutual assistance requirements are screened out/selected. Each of the aforementioned points is taken as a factor. In the aforementioned embodiments, the importance of each factor may be configured in the network optimization algorithm, and the mutual assistance device is screened out/selected based on the importance of each factor. In some embodiments of the present disclosure, four access judgment rules are provided for the selection of the mutual assistance device. According to an actual situation, the networked devices are screened out/selected based on the access judgment rules to obtain the mutual assistance device that meets the requirements.

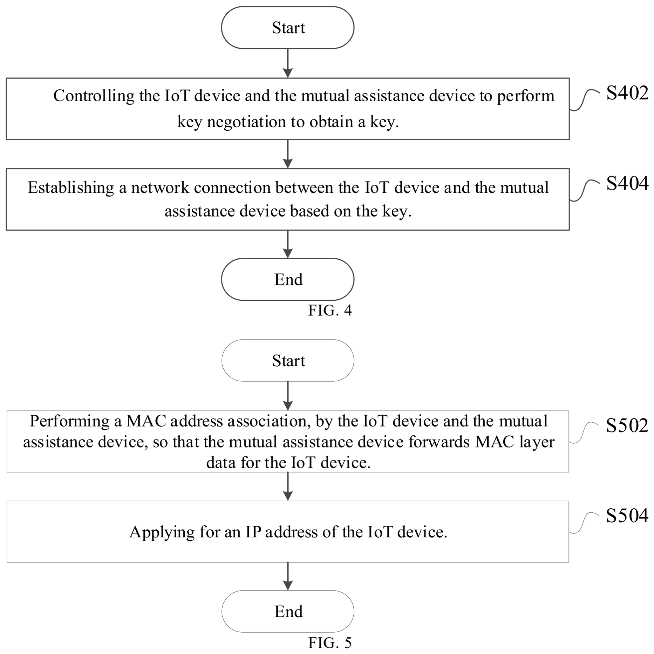

In some embodiments of the present disclosure, FIG. 4 illustrates a fourth flowchart of a network connection method for an IoT device provided by the present device. As illustrated by FIG. 4, the connecting, by the IoT device that requires the network connection, to network through the mutual assistance device includes operations at blocks in the following.

At block S402: controlling the IoT device and the mutual assistance device to perform a key negotiation to obtain a key.

At block S404: establishing a network connection between the IoT device and the mutual assistance device based on the key.

In some embodiments of the present disclosure, the key negotiation is required to be performed between the IoT device and the mutual assistance device to obtain a key. In the process of data transmission between the IoT and the mutual assistance device, the security of data transmission may be ensured through the key.

In some embodiments of the present disclosure, the establishing a network connection between the IoT device and the mutual assistance device includes:
performing, by the IoT device and the mutual assistance device, standard connection in an AP mode and a STA mode; where the mutual assistance device acts as a pseudo-AP and allows the IoT device to access.

In some embodiments of the present disclosure, the network connection of the IoT device and the mutual assistance device may perform standard connection in the AP mode and the STA mode, where the mutual assistance device acts as the pseudo-AP and allows the IoT device to access. The above modes between the IoT device and the mutual assistance device may well ensure the stability of the network connection between the two devices.

In some embodiments of the present disclosure, FIG. 5 illustrates a fifth flowchart of a network connection method for an IoT device provided by some embodiments of the present disclosure. As illustrated by FIG. 5, the establishing a network connection between the IoT device and the mutual assistance device includes operations at blocks in the following.

At block S502: performing a Media Access Control (MAC) address association, by the IoT device and the mutual assistance device, so that the mutual assistance device forwards MAC layer data for the IoT device.

At block S504: applying for an Internet Protocol (IP) address of the IoT device.

Optionally, the IoT device and the mutual assistance device may have a private MAC address association relationship, generating a logical mapping to enable point-to-point MAC data transmission between the IoT device and the mutual assistance device. The mutual assistance device performs the MAC layer data forwarding for the IoT device.

Optionally, after completing the MAC address association between the IoT device and the mutual assistance device, the IP address for the IoT device may be applied for to enable the IoT device to realize the network connection.

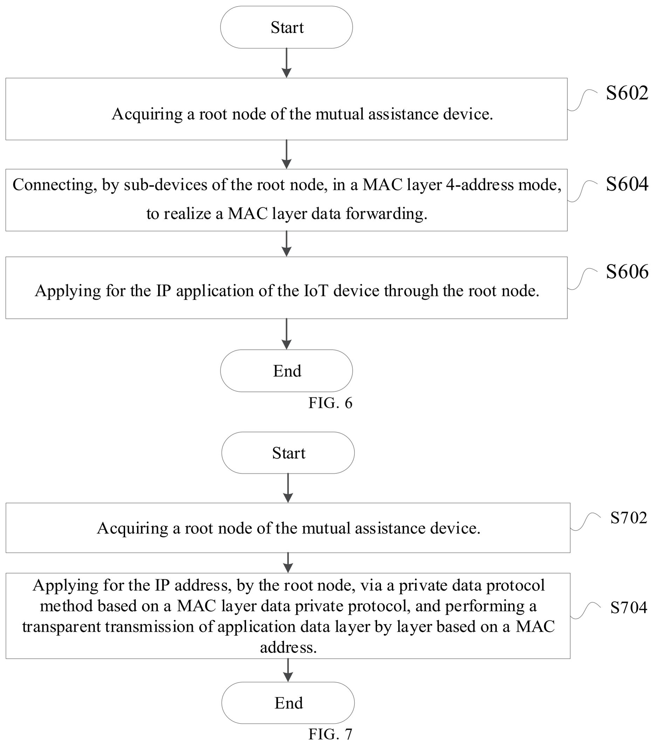

In some embodiments of the present disclosure, FIG. 6 illustrates a sixth flowchart of a network connection method for an IoT device provided by some embodiments of the present disclosure. As illustrated by FIG. 6, the applying for an IP address for the IoT device includes operations at blocks in the following.

At block S602: acquiring a root node of the mutual assistance device.

At block S604: connecting, by sub-devices of the root node, in a MAC layer 4-address mode to realize the MAC layer data forwarding.

At block S606: applying for the IP application of the IoT device through the root node.

Optionally, the root node of the mutual assistance device is found. Sub-devices other than the root node are connected in the MAC layer 4-address mode to realize the MAC layer data forwarding. The root node acts as a proxy for the router to apply for the IP address. Through the aforementioned method, the network connection of the IoT device is completed.

In some embodiments of the present disclosure, 3-address and 4-address modes are basic communication modes of the Wi-Fi MAC protocol. The 3-address mode is applied for a standard normal communication, and the 4-address mode is applied for a MAC layer forwarding. The 4-address mode includes Receiver Address or Remote Address (RA), Transmitter Address (TA), Destination or Target Address (DA), and Source Address (SA). The 3-address mode includes SA, DA, and TA. In some embodiments of the present disclosure, FIG. 7 illustrates a seventh flowchart of a network connection method for an IoT device provided by some embodiments of the present disclosure. As illustrated by FIG. 7, the applying for an IP address for the IoT device includes operations at blocks in the following.

At block S702: acquiring a root node of the mutual assistance device.

At block S704: applying for the IP address, by the root node, via a private data protocol method based on a MAC layer data private protocol, and performing a transparent transmission of application data layer by layer based on a MAC address.

Optionally, a customized private protocol may be further adopted to implement the IP address application based on a MAC layer data private protocol, and perform a transparent transmission of application data layer by layer with MAC layer.

Optionally, when discovering the devices and establishing a connection relationship with the private protocol, the sub-devices communicate with the MAC layer 4-address mode, the root node and the AP router adopt the standard mode, and the root node has both 4-address and 3-address transmission and reception modes, forwarding proxied by the root node.

Optionally, after the device discovery is completed, the establishment of a MAC layer routing relationship is implemented layer by layer, and the MAC layer routing relationship is synchronized with all connected devices.

Optionally, after the root node completes the IP address application, the devices have a MAC layer routing table, and IP layer data forwarding may be realized.

In some embodiments of the present disclosure, the network connection method for the IoT device further includes:
maintaining, by the IoT device and the mutual assistance device, the connection relationship through the MAC layer private protocol in a heartbeat manner.

Optionally, in the device connection management, the mutual assistance connection between the devices is required to maintain the connection relationship through an application heartbeat. The heartbeat maintenance may be implemented through the MAC layer private protocol, that is, a data refresh received from the networked devices within a specified time is considered as a heartbeat. When there is no data refresh, an empty data packet is also required to be sent to maintain the connection.

In some embodiments of the present disclosure, maintaining the connection relationship in the heartbeat manner may detect problems promptly during the connection, thereby maintaining the stability of the network connection.

In some embodiments of the present disclosure, the network connection method for the IoT device, further includes:
in a case where the sub-devices of the root node are disconnected, updating MAC routing tables and router information to all connected devices, and reconnecting the disconnected devices.

Optionally, when the sub-devices of the root node are disconnected, the device MAC routing tables and the router information are required to be updated to all connected devices. The disconnected devices are required to restart the connection process to achieve reliable connection.

Optionally, the restarting the connection means that the IoT device rescans the surrounding network devices, and performs the network connection.

In some embodiments of the present disclosure, the network connection method for the IoT device further includes:
in a case where an intermediate node between the IoT device and the root node is disconnected, notifying managed nodes to terminate the connection relationships, and re-initiating a connection request.

Optionally, when the intermediate node is disconnected, the managed nodes are required to be notified to terminate the connection relationships, and the connection requests are required to be re-initiated.

Optionally, the re-initiating the connection request means that the IoT device scans the surrounding network devices again to perform network connection.

An execution entity of the network connection method for the IoT device provided by the present disclosure may be a network connection apparatus for the IoT device. In some embodiments of the present disclosure, the network connection apparatus for the IoT device executing the network connection method for the IoT device is taken as an example to illustrate the network connection apparatus for the IoT device provided by some embodiment of the present disclosure.

Some embodiments of the present disclosure provide a network connection apparatus for an IoT device. FIG. 8 illustrates a structural diagram of a network connection apparatus for an IoT device provided by some embodiments of the present disclosure. As illustrated in FIG. 8, the network connection apparatus 100 includes: a scanning module 110, a receiving module 120, a determination module 130, a selecting module 140, and a connection module 150. The scanning module 110 is configured to enable an IoT device that requires a network connection to scan network devices surrounding the IoT device; where the network devices include a routing device and a household appliance that is network-connected. The receiving module 120 is configured to receive responses from the network devices. The determination module 130 is configured to determine whether the IoT device that requires the network connection is in a weak network environment based on the responses. The selecting module 140 is configured to select a mutual assistance device from the networked devices in a case where the IoT device that requires the network connection is in a weak network environment. The connection module 150 is configured to enable the IoT device that requires the network connection to connect to network through the mutual assistance device, so that the IoT device is connected to a target server.

In some embodiments of the present disclosure, based on a Wi-Fi mutual assistance capability of household appliances, when the IoT device is at an edge of the weak signal coverage of the router, the configured IoT device can access the network through the household appliance that have been network-connected as a proxy to connect to the target server. This method may solve the problems of the high connection failure rate and the high device loss rate of IoT devices, in the weak network environment of the user, due to the long distance from the IoT device to the router and the weak signal strength, thereby effectively improving the user experience.

The network connection apparatus 100 for the IoT device provided by some embodiments of the present disclosure may implement each process of the aforementioned embodiments of the network connection method for the IoT device and achieve the same technical effect. To avoid repetition, details are not repeated herein.

The network connection apparatus for the IoT device in some embodiments of the present disclosure may be an electronic device, or a component in the electronic device, such as an integrated circuit or a chip. The electronic device may be a terminal or other devices except the terminal. Exemplarily, the electronic device may be a mobile phone, a tablet computer, a notebook computer, a palmtop computer, a vehicle-mounted electronic device, a Mobile Internet Device (MID), an Augmented Reality (AR)/Virtual Reality (VR) device, a robot, a wearable device, an Ultra-Mobile Personal Computer (UMPC), a netbook, a Personal Digital Assistant (PDA), etc., and may further be a server, a Network Attached Storage (NAS), a Personal Computer (PC), a Television (TV), an Automated Teller Machine, or a self-service machine, etc. Some embodiments of the present disclosure are not specifically limited.

The network connection apparatus for the IoT device in some embodiments of the present disclosure may be a device with an operating system. The operating system may be an Android operating system, an iOS operating system, or other possible operating systems. Some embodiments of the present disclosure are not specifically limited.

The network connection apparatus 100 for the IoT device provided by some embodiments of the present disclosure may implement each process of the aforementioned embodiments. To avoid repetition, the details are not repeated herein.

Optionally, as illustrated in FIG. 9, some embodiments of the present disclosure further provide an electronic device 1000, and the electronic device 1000 includes a processor 1002 and a memory 1004. The memory 1004 stores programs or instructions executable on the processor 1002. When the programs or instructions are executed by the processor 1002, the operations of the aforementioned embodiments of the network connection method for the IoT device are implemented, and the same technical effect can be achieved. To avoid repetition, the details are not repeated herein.

It should be noted that the electronic device in some embodiments of the present disclosure includes the aforementioned mobile electronic device and non-mobile electronic device.

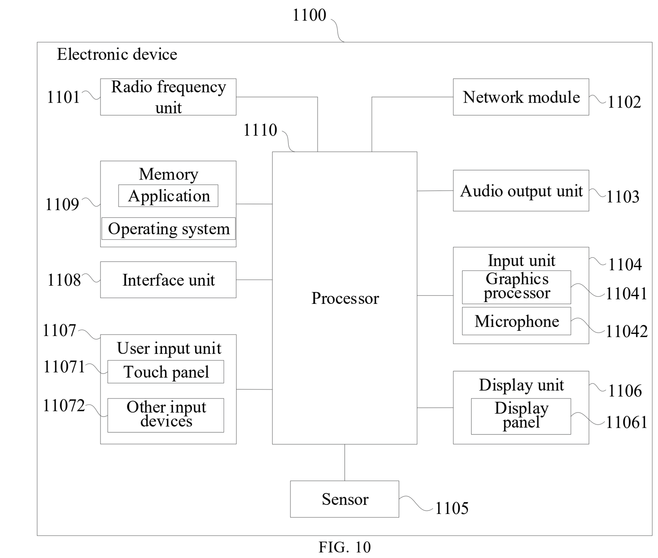

FIG. 10 is a schematic hardware structure diagram of an electronic device provided by some embodiments of the present disclosure.

The electronic device 1100 includes, but is not limited to: a radio frequency unit 1101, a network module 1102, an audio output unit 1103, an input unit 1104, a sensor 1105, a display unit 1106, a user input unit 1107, an interface unit 1108, a memory 1109, a processor 1110, and other components.

Those skilled in the related art can understand that the electronic device 1100 may further include a power supply (such as a battery) for supplying power to various components. The power supply may be logically connected to the processor 1110 through a power management system, so as to implement functions such as charging, discharging, and power consumption management through the power management system. The structure of the electronic device illustrated in FIG. 10 does not constitute a limitation on the electronic device. The electronic device may include more or fewer components than illustrated, or combine some components, or have different component arrangements. Details are not repeated here.

The processor 1110 is configured to scan, by an IoT device that requires a network connection, network devices surrounding the IoT device, where the network devices include a routing device and a household appliance that is network-connected.

The processor 1110 is configured to receive responses from the network devices.

The processor 1110 is configured to determine whether the IoT device that requires the network connection is in a weak network environment based on the responses.

The processor 1110 is configured to select a mutual assistance device from the networked devices, in a case where the IoT device that requires the network connection is in a weak network environment.

The processor 1110 is configured to connect, by the IoT device that requires network connection, to network through the mutual assistance device, so that the IoT device is connected to a target server.

The processor 1110 provided by some embodiments of the present disclosure can implement each process of the above embodiment of the network connection method for the IoT device and achieve the same technical effect. To avoid repetition, details are not repeated herein.

It should be understood that in some embodiment of the present disclosure, the input unit 1104 may include a Graphics Processing Unit (GPU) 11041 and a microphone 11042. The graphics processor 11041 processes image data of still pictures or videos obtained by an image capture device (such as a camera) in a video capture mode or an image capture mode. The display unit 1106 may include a display panel 11061, which may be configured in the form of a Liquid Crystal Display (LCD), an Organic Light-Emitting Diode (OLED), and etc. A user input unit 1107 includes at least one of a touch panel 11071 and other input devices 11072. The touch panel 11071 is also called a touch screen. The touch panel 11071 may include a touch detection device and a touch controller. Other input devices 11072 may include, but are not limited to, a physical keyboard, function keys (such as volume control keys, switch keys, and etc.), a trackball, a mouse, and a joystick. Details are not repeated here.

The memory 1109 may be configured to store software programs and various data. The memory 1109 may mainly include a first storage area for storing programs or instructions and a second storage area for storing data, where, the first storage area may store an operating system, at least one application program or instruction required for a function (such as a sound playback function, an image playback function, and etc.), and the like. In addition, the memory 1109 may include a volatile memory or a non-volatile memory, or the memory 1109 may include both volatile and non-volatile memories. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), a Static RAM (SRAM), a Dynamic RAM (DRAM), a Synchronous DRAM (SDRAM), a Double Data Rate SDRAM (DDRSDRAM), an Enhanced SDRAM (ESDRAM), a Synch link DRAM (SLDRAM), and a Direct Rambus RAM (DRRAM). The memory 1109 in some embodiments of the present disclosure includes, but is not limited to, these and any other suitable types of memories.

The processor 1110 may include one or more processing units. Optionally, the processor 1110 integrates an application processor and a modem processor, where, the application processor mainly processes operations related to an operating system, a user interface, and an application program. It may be understood that the above modem processor may also not be integrated into the processor 1110.

Some embodiments of the present disclosure further provide a readable storage medium. The readable storage medium stores programs or instructions. When the programs and instructions are executed by the processor, each process of the above embodiments of the network connection method for the IoT is implemented, and a same technical effect can be achieved. To avoid repetition, details are not repeated here.

Here, the processor is the processor in the electronic device in the aforementioned embodiments. The readable storage medium includes a computer-readable storage medium, such as a computer-readable memory ROM, a random access memory RAM, a magnetic disk, or an optical disk.

Some embodiments of the present disclosure further provide a chip. The chip includes a processor and a communication interface. The communication interface is coupled to the processor. The processor is configured to run programs or instructions to implement each process of the above embodiments of the network connection method for the IoT device and achieve a same technical effect. To avoid repetition, details are not repeated here.

It should be understood that the chip mentioned in some embodiments of the present disclosure may also be called a system-on-chip, a system chip, a chip system, or an on-chip system, etc.

Some embodiments of the present disclosure provide a computer program product. The program product is stored in a storage medium. The program product is executed by at least one processor to implement each process of the aforementioned embodiments of the network connection method for the IoT device and achieve the same technical effect. To avoid repetition, details are not repeated here.

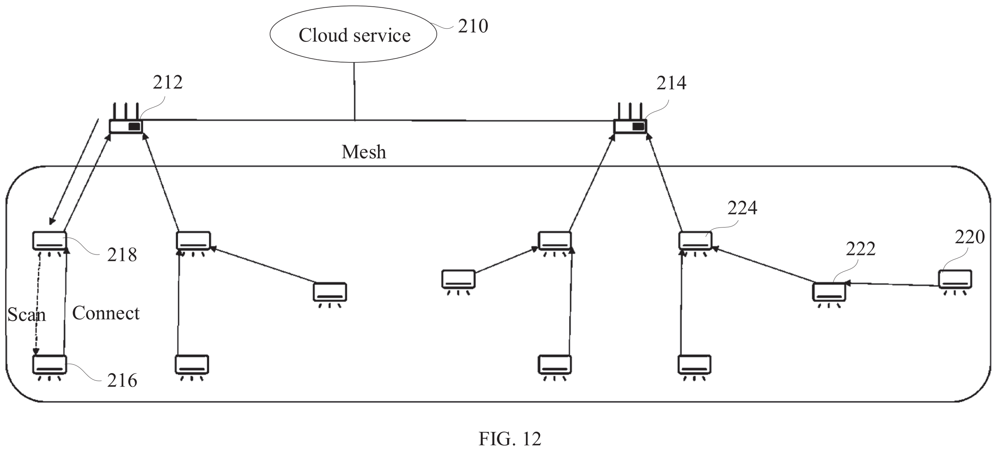

A topology diagram of the network connection method for the IoT device according to some embodiments of the present disclosure is illustrated in FIG. 12, including: a cloud service 210 (i.e., a target server), a first router 212 and a second router 214 that are connected to the cloud service 210, multiple household appliances forming a mesh (Mesh networking originally refers to a wireless mesh network with multi-hop interconnection and mesh topology characteristics), a first IoT device 216 for scanning and connecting to a first mutual assistance device 218, the first mutual assistance device 218 that is connected to the first router 212, a second IoT device 220 that is connected to a second mutual assistance device 222, the second mutual assistance device 222 that is connected to a third mutual assistance device 224, and the third mutual assistance device 224 that is connected to the second router 214 and serve as a root node.

The network connection includes following operations.
(1) A device that requires to connect to a router (i.e., the IoT device that requires the network connection) first scans connectable network devices surrounding the device (including a routing device and household appliances that have been network-connected) according to the normal process.
(2) All target routers and household appliances that meet the mutual assistance connection respond to the requests.
(3) After receiving the responses, the terminal of the IoT device to be connected to the network determines with which network device to establish a connection according to the established rules (in a case where the terminal of the IoT device is in a weak network environment, it performs a mutual assistance connection with the household appliances; in a case where the terminal of the IoT device is not in the weak network environment, it connects with a router). In a case where the router is connected, standard AP and STA mode are adopted for connection. In a case where the household appliance meets a rule of mutual assistance and the connection is an optimal connection, a private connection of mutual assistance with the household appliance is adopted.
(4) Access judgment rules of the private mutual assistance connection are as below.
   1. Confirm whether the signal strength is suitable for connection.
   2. Confirm whether the network connected to the networked device is the target network to be connected by the current device.
   3. Confirm whether the load accessed by the networked device meets requirements.
   4. Confirm whether the network hierarchy of the networked device or the mutual assistance device meets requirements.
      Comprehensive judgment rules include but not limit to the above conditions. The judgment rules are adopted to screen out a target device that meets requirements of mutual assistance connection.
(5) The mutual assistance device and the target device (i.e., the IoT device that requires network connection) perform key negotiation to negotiate a Wi-Fi encryption key for subsequent connection and transmission.
(6) The connection between the target device and the mutual assistance device may adopt the standard connection in the AP mode and the STA mode, that is, the mutual assistance device implements a pseudo-AP to allow the target device to access.
(7) The target device and the mutual assistance device may further adopt a private MAC association relationship to generate a logical mapping, enabling point-to-point MAC data transmission between the target device and the mutual assistance device. The mutual assistance device performs MAC layer data forwarding for the target device.
(8) Sub-devices other than the root node are connected in MAC layer 4-address mode to realize MAC data forwarding, and the root node acts as a proxy for the router to apply for an IP address; a custom private protocol may further be adopted to implement IP address application based on the MAC layer data private protocol, and perform layer-by-layer transparent transmission of application data through MAC.
(9) When discovering the devices and establishing a connection relationship with a private protocol, sub-devices communicate in the MAC 4-address mode. The root node and an AP router adopt the standard mode. The root node has both 4-address and 3-address transmission and reception modes. Forwarding is proxied by the root node.
(10) After the device discovery is completed, the establishment of the MAC layer routing relationship is implemented level by level, and the MAC routing relationship is synchronized to all connected devices.
(11) After the IP address applied, the devices have a MAC relationship routing table, and IP layer data forwarding may be realized.
(12) For the device connection management, the mutual assistance connection between devices needs to maintain the connection relationship through application heartbeat. Heartbeat maintenance can be implemented through the MAC layer private protocol. For example, the data refresh received from the connected device within a specified time, the data refresh is considered as a heartbeat. When there is no data refresh, the empty data MAC packet also needs to be sent to maintain the connection.
(13) When the sub-device is disconnected, it is necessary to update the device MAC routing tables and router information to all connected devices. The disconnected device needs to restart the connection process to achieve a reliable connection. And start again from operation (1).
(14) When the intermediate node is disconnected, it needs to notify the managed nodes to terminate the connection relationships and restart the connection requests. And starts again from operation (1).

Some embodiments of the present disclosure may solve the problems of unsuccessful device network connection and high failure rate in the weak network environment of the user.

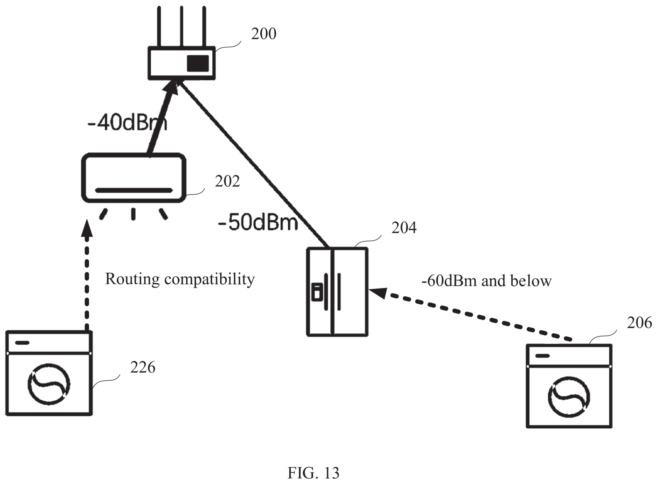

A Wi-Fi mutual assistance connection routing topology diagram is illustrated in FIG. 13. The third router 200 is connected to the first intelligence household appliance 202 with a router signal strength of - 40dBm, the third router 200 is connected to the second intelligence household appliance 204 with a router signal strength of -50dBm, and the third router 200 is connected to the third intelligence household appliance 206 with a router signal strength of less than -60dBm. The third intelligence household appliance 206 is located in the weak network environment. Adopting the network connection method for the IoT device provided by some embodiments of the present disclosure, the second intelligence household appliance 204 is selected as the mutual assistance device. The third intelligence household appliance 206 with weak signal can connect to the network through the second intelligence household appliance 204. Here, the second intelligence household appliance 204 may be a refrigerator, and the third intelligence household appliance 206 may be a washing machine. The fourth intelligence household appliance 226 is also located in the weak network environment. Adopting the network connection method for the IoT device provided by some embodiments of the present disclosure, the first intelligence household appliance 202 is selected as the mutual assistance device. The fourth intelligence household appliance 226 with weak signal strength can connect to the network through the first intelligence household appliance 202. The third router 200 has routing compatibility. Here, the fourth intelligence household appliance 226 may be a washing machine.

The methods may be implemented in various different ways according to specific features and/or example applications. For example, these methods can be implemented through hardware, firmware, and/or a combination of software. For example, in hardware implementation, the processor can be implemented in one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, electronic devices, other device units for performing the above functions, and/or combinations thereof.

The computer-readable storage medium may be a tangible device that can retain and store instructions for use by an instruction execution device. The computer-readable storage medium may be an electronic storage device, a magnetic storage device, an optical storage device, an electromagnetic storage device, a semiconductor storage device, or any appropriate combination of the above, but is not limited thereby. A non-exhaustive list of more specific examples of computer-readable storage media includes: a portable computer floppy disk, a hard disk, a Random Access Memory (RAM), a Read-Only Memory (ROM), an Erasable Programmable Read-Only Memory (EPROM or flash memory), a Static Random Access Memory (SRAM), a portable Compact Disc Read-Only Memory (CD-ROM), a Digital Versatile Disc (DVD), a memory card, a floppy disk, an encoded mechanical device (such as a punch card or a groove with a raised structure recorded with instructions), and any appropriate combination of the above. The computer-readable storage medium adopted herein should not be understood as a transmission signal in itself, such as a radio wave or other freely propagating electromagnetic wave, an electromagnetic wave propagating through a waveguide or other transmission medium, or an electrical signal transmitted through a wire.

It should be noted that in this disclosure, the terms "include", "comprise" or any other variant thereof are intended to cover non-exclusive inclusion, so that a process, a method, an article or a device including a series of elements not only includes those elements, but also includes other elements not explicitly listed, or further includes elements inherent to such process, method, article or device. Without more restrictions, the element defined by the sentence "including a..." does not exclude the existence of other identical elements in the process, method, article or device including the element. In addition, it should be pointed out that the scope of the methods and devices in the embodiments of the present disclosure is not limited to performing functions in the order illustrated or discussed, and may further include performing functions in a substantially simultaneous manner or in a reverse order according to the involved functions. For example, the described methods may be performed in an order different from the described order, and various operations may further be added, omitted, or combined. In addition, features described with reference to certain embodiments may be combined in other embodiments.

Through the description of the above embodiments, those skilled in the art may clearly understand that the methods of the above embodiments may be implemented by means of software plus a necessary general hardware platform. Of course, the above embodiments may further be implemented by hardware, but in many cases, the former is a better implementation. Based on this understanding, the technical solution of the present disclosure essentially or a part that contributes to the related art may be embodied in the form of a computer software product. The computer software product is stored in the storage medium (such as ROM/RAM, magnetic disk, optical disk), and includes several instructions to have the terminal (which can be a mobile phone, a computer, a server, or a network device, etc.) to execute the methods of each embodiment of the present disclosure.

The above specific implementations are only illustrative and not restrictive. Under a enlightenment of the present disclosure, those skilled in the art can make many forms without departing from the purpose of the present disclosure and the protection scope of the claims, all of which belong to the protection of the present disclosure.

## Claims

1. A network connection method for an Internet of Things, IoT, device, comprising:
scanning, by an IoT device that requires a network connection, network devices surrounding the IoT device, wherein the network devices comprise a routing device and a household appliance that is network-connected;
receiving responses from the network devices;
determining whether the IoT device that requires the network connection is in a weak network environment based on the responses;
in a case where the IoT device that requires the network connection is in the weak network environment, selecting a mutual assistance device from networked devices; and
performing, by the IoT device that requires the network connection, network connection through the mutual assistance device, causing the IoT device to be connected to a target server.

2. The network connection method according to claim 1, further comprising:
in a case where the IoT device that requires the network connection is not in the weak network environment, selecting the routing device from the networked devices, and performing, by the IoT device that requires the network connection, network connection through the routing device, causing the IoT device to be connected to a target server.

3. The network connection method for the IoT device according to claim 1 or 2, further comprising:
acquiring a signal strength between the IoT device that requires the network connection and the routing device; and
determining that the IoT device is in the weak network environment in a case where the signal strength is less than a first value.

4. The network connection method according to any one of claims 1-3, wherein the selecting a mutual assistance device from the networked devices comprises:
acquiring a signal strength between the IoT device that requires the network connection and the household appliance that is network-connected;
acquiring network connection information of the household appliance that is network-connected;
acquiring a load of the household appliance that is network-connected;
acquiring a network hierarchy of the household appliance that is network-connected; and
selecting the mutual assistance device from the household appliance that is network-connected based on the signal strength, the network connection information, the load, and the network hierarchy.

5. The network connection method according to any one of claims 1-4, wherein the performing, by the IoT device that requires the network connection, network connection through the mutual assistance device comprises:
controlling the IoT device that requires the network connection and the mutual assistance device to perform a key negotiation, to obtain a key; and
establishing the network connection between the IoT device that requires the network connection and the mutual assistance device based on the key.

6. The network connection method according to claim 5, wherein the establishing the network connection between the IoT device that requires the network connection and the mutual assistance device comprises:
performing, by the IoT device and the mutual assistance device, standard connection in an Access Point, AP, mode and a Station, STA, mode, wherein the mutual assistance device acts as a pseudo-AP and allows the IoT device to access.

7. The network connection method according to claim 5, wherein the establishing the network connection between the IoT device that requires the network connection and the mutual assistance device comprises:
performing a Media Access Control, MAC, address association, by the IoT device and the mutual assistance device, causing the mutual assistance device to forward MAC layer data for the IoT device; and
applying for an Internet Protocol, IP, address of the IoT device.

8. The network connection method according to claim 7, wherein the applying for an IP address of the IoT device comprises:
acquiring a root node of the mutual assistance device;
connecting, by sub-devices of the root node in a MAC layer 4-address mode, to realize MAC data forwarding; and
applying for the IP address of the IoT device through the root node.

9. The network connection method according to claim 7, wherein the applying for an IP address of the IoT device comprises:
acquiring a root node of the mutual assistance device; and
applying for the IP address, by the root node, via a private data protocol method based on a MAC layer data private protocol, and performing a transparent transmission of application data layer by layer based on a MAC address.

10. The network connection method for the IoT device according to any one of claims 7-9, further comprising:
maintaining a connection relationship between the IoT device and the mutual assistance device through a MAC layer data private protocol in a heartbeat manner.

11. The network connection method for the IoT device according to any one of claims 7-10, further comprising:
in a case where the sub-devices of the root node are disconnected, updating MAC routing tables and router information to all connected devices, and reconnecting disconnected devices.

12. The network connection method for the IoT device according to any one of claims 7-11, further comprising:
in a case where an intermediate node between the IoT device and the root node is disconnected, notifying managed nodes to terminate connection relationships, and re-initiating a connection request.

13. A network connection apparatus for an Internet of Things, IoT, device, comprising:
a scanning module, configured for the IoT device that requires a network connection to scan network devices surrounding the IoT device, wherein the network devices comprise a routing device and a household appliance that is network-connected;
a receiving module, configured to receive responses from the network devices;
a determination module, configured to determine whether the IoT device that requires the network connection is in a weak network environment based on the responses;
a selecting module, configured to select a mutual assistance device from networked devices in a case where the IoT device that requires the network connection is in the weak network environment; and
a connection module, configured for the IoT device that requires the network connection to perform network connection through the mutual assistance device, causing the IoT device to be connected to a target server.

14. An electronic device, comprising:
a memory, having programs or instructions stored thereon; and
a processor, configured to implement steps of the network connection method for an IoT device according to any one of claims 1-12 when executing programs or instructions.

15. A readable storage medium, having programs or instructions stored thereon, wherein the programs or instructions, when executed by a processor, causes the processor to implement steps of the network connection method for an IoT device according to any one of claims 1-12.

16. A computer program product, comprising a computer program, wherein the computer program, when executed by a processor, causes the processor to implement steps of the network connection method for an IoT device according to any one of claims 1-12.
